Europäisches Patentamt

**European Patent Office** (11) Veröffentlichungsnummer: **0 065 729**

Office européen des brevets **B1**

(19)

(12) EUROPÄISCHE PATENTSCHRIFT

(45) Veröffentlichungstag der Patentschrift: (51) Int. Cl.³: **B 29 D 23/04**
14.03.84

(21) Anmeldenummer: **82104280.1**

(22) Anmeldetag: **15.05.82**

(54) Vorrichtung zur Herstellung von Kunststoffrohren mit Querrillen.

(30) Priorität: **22.05.81 DE 3120480**

(73) Patentinhaber: **Hegler, Wilhelm, Goethestrasse 2, D-8730 Bad Kissingen (DE)**

(43) Veröffentlichungstag der Anmeldung:
**01.12.82 Patentblatt 82/48**

(72) Erfinder: **Hegler, Wilhelm, Goethestrasse 2, D-8730 Bad Kissingen (DE)**
Erfinder: **Hegler, Ralph-Peter, Goethestrasse 3, D-8730 Bad Kissingen (DE)**

(45) Bekanntmachung des Hinweises auf die Patenterteilung:
**14.03.84 Patentblatt 84/11**

(74) Vertreter: **Rau, Manfred, Dr. Dipl.-Ing. et al, Patentanwälte Rau & Schneck Postfach 91 04 80 Lange Zeile 30, D-8500 Nürnberg 91 (DE)**

(84) Benannte Vertragsstaaten:
**AT DE FR GB NL SE**

(56) Entgegenhaltungen:
**DE - A - 2 061 027**
**DE - A - 2 537 184**
**DE - A - 2 732 635**

Vorrichtung zur Herstellung von Kunststoffrohren mit Querrillen

Die Erfindung betrifft eine Vorrichtung nach dem Oberbegriff des Patentanspruchs 1 bzw. 2.

Bei einer derartigen aus der DE-OS 2 061 027 und der DE-PS 2 065 048 bekannten Vorrichtung sind die Kühlkanäle einerseits und die Vakuumkanäle andererseits jeweils in der entsprechenden Halbkokille miteinander verbunden. Das Kühlwasser steht hierbei, während es die jeweilige Halbkokille durchläuft, unter einem erheblichen Unterdruck, wodurch es sogar teilweise verdampft, wodurch die Kühlwirkung noch erhöht wird. Diese bekannte Ausgestaltung hat sich im Grundsatz außerordentlich gut bewährt; es taucht aber das Problem auf, daß Kondenswasser durch die Verbindungen zwischen der jeweiligen Formausnehmung und dem Vakuumkanal in den Formraum gelangt und das herzustellende Rohr, das sich ja noch im Zustand eines warmplastischen Schlauches befindet, an seiner Oberfläche beschädigt. Weiterhin ist das Problem aufgetaucht, daß einerseits in Abhängigkeit vom gewählten Rohrdurchmesser und der gewählten Rohrwandstärke und andererseits in Abhängigkeit von den eingesetzten Kunststoffen, wie z. B. Polyäthylen, Polypropylen oder Polyvinylchlorid, stark voneinander abweichende, für den einzelnen Bearbeitungsvorgang aber möglichst konstante Temperaturen der Halbkokillen in der Form eingehalten werden müssen, um zu einem optimal gefertigten Rohr zu kommen.

Aus der DE-OS 2 732 635 ist eine Vorrichtung zum kontinuierlichen Herstellen von mit Querprofilierungen versehenen Kunststoffrohren bekannt, die nicht nach dem sogenannten Vakuumverfahren, sondern nach dem Blasverfahren arbeitet. Hierbei werden die Halbkokillen in gekühlten Führungskanälen geführt, über die auch die Wärmeabfuhr erfolgt.

Bei einer aus der DE-OS 2 537 184 bekannten Vorrichtung zur Herstellung der erwähnten Rohre ist zur Kühlung der Halbkokillen vorgesehen, diese jeweils an mit umlaufende Kühlwasserzuführ- und Kühlwasserabführleitungen anzuschließen.

Der Erfindung liegt die Aufgabe zugrunde, eine Vorrichtung der gattungsgemäßen Art so auszugestalten, daß eine genaue Temperatureinstellung der Halbkokillen während des Betriebes sichergestellt ist.

Diese Aufgabe wird erfindungsgemäß durch die kennzeichnenden Merkmale des Patentanspruchs 1 oder 2 gelöst. Durch die völlige Trennung von Vakuumkanälen und Kühlkanälen in der jeweiligen Halbkokille ist sichergestellt, daß der Kühlwasserfluß unbeeinflußt von anderen Größen, wie z. B. vom Vakuum, geregelt bzw. gesteuert werden kann, wobei gleichzeitig sichergestellt ist, daß keine unkontrollierbaren negativen Einflüsse auf die Qualität des herzustellenden Rohres ausgehen.

Die erfindungsgemäße Trennung der Vakuumkanäle von den Kühlkanälen hat zur Folge, daß eine automatische Temperaturregelung bzw. -steuerung vorgesehen werden kann, da die Temperatur der Halbkokillen nur noch über die Kühlwassermenge gesteuert wird.

Je nach Größe der Vorrichtung und insbesondere je nach Durchmesser der herzustellenden Rohre können die Maßnahmen nach den Ansprüchen 1 bzw. 2 vorgesehen sein, wobei die Maßnahmen nach Anspruch 1 für die Herstellung von Rohren mit großen Durchmessern vorgesehen sind, während die Maßnahmen nach Anspruch 2 für Rohre mit kleinerem Durchmesser vorgesehen sind.

Anspruch 3 gibt eine vorteilhafte Möglichkeit zur Erfassung der Temperatur der Halbkokillen wieder.

Weitere Vorteile der Erfindung ergeben sich aus der Beschreibung von Ausführungsbeispielen anhand der Zeichnung. Es zeigt

Fig. 1 eine Draufsicht auf eine Vorrichtung nach der Erfindung,

Fig. 2 einen Vertikalschnitt durch ein Halbkokillen-Paar der Vorrichtung nach der Erfindung gemäß der Schnittlinie II-II in Fig. 3, 4, 5,

Fig. 3 einen abgesetzten Horizontalschnitt durch das Halbkokillen-Paar gemäß der Schnittlinie III-III in Fig. 2,

Fig. 4 eine vertikale Innen-Teilansicht einer Halbkokille nach Fig. 2 und 3,

Fig. 5 eine Schnittdarstellung einer Halbkokille gemäß der Schnittlinie V-V in Fig. 4,

Fig. 6 einen Vertikalschnitt durch ein Halbkokillen-Paar in geänderter Ausführung,

Fig. 7 einen Vertikalschnitt durch eine weitere Ausführung eines Halbkokillen-Paares und

Fig. 8 eine Darstellung einer Temperatursteuerung für die Halbkokillen.

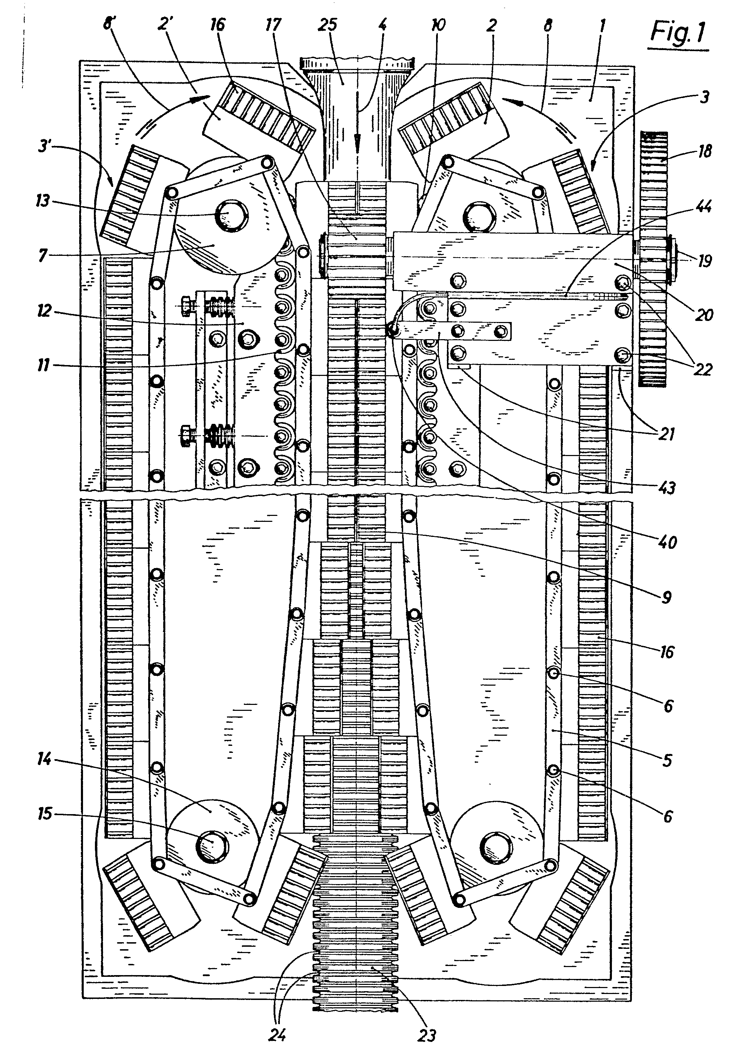

Wie Fig. 1 erkennen läßt, weist die Vorrichtung zur Herstellung von Kunststoffrohren mit Querrillen einen Maschinentisch 1 auf, auf dem Halbkokillen 2 bzw. 2' angeordnet sind, die jeweils zu zwei sogenannten Ketten 3 bzw. 3' miteinander verbunden sind. Hierzu ist an jeder Halbkokille 2 bzw. 2' in ihrem außenliegenden, in Produktionsrichtung 4 vorderen Bereich eine Lasche 5 mittels eines Ablenkbolzens 6 angelenkt, die an der entsprechenden Stelle der nachfolgenden Halbkokille 2 bzw. 2' ebenfalls mittels eines solchen Anlenkbolzens 6 angebracht ist. Die so gebildeten Ketten 3, 3' sind an ihrem in Produktionsrichtung 4 gesehen rückwärtigen Ende über als sogenannte Einlaufrollen 7 dienende Umlenkräder geführt. Die einzelnen Halbkokillen 2, 2' werden beim Umlauf der Ketten 3, 3' entsprechend den Umlaufrichtungspfeilen 8 bzw. 8' in eine Formstrecke 9 eingeschwenkt, in der jeweils zwei Halbkokillen 2, 2' zu einem Kokillenpaar vereinigt werden, wobei wiederum in Produktionsrichtung 4 hintereinanderfolgende Kokillenpaare dicht an dicht liegen. Um ein schnelles Schließen der Halbkokillen 2, 2' zu ei-

ner parallelen und aneinanderliegenden Stellung zu erreichen, sind sogenannte Schließrollen 10 vorgesehen, die die in Produktionsrichtung 4 hinteren Enden der Halbkokillen 2, 2' beschleunigt zusammenführen.

In der Formstrecke 9 selber werden die aneinanderliegenden Halbkokillen 2, 2' mittels Führungsrollen 11, die in Führungsleisten 12 drehbar gelagert sind, gegeneinander gedrückt. Die Einlaufrollen 7 sind um Achszapfen 13 drehbar am Maschinentisch 1 angebracht.

Am in Produktionsrichtung 4 vorderen Ende des Maschinentisches 1 sind ebenfalls als Umlenkräder dienende Rücklaufrollen 14 um Achszapfen 15 drehbar gelagert, um die die Ketten 3 bzw. 3' umgelenkt und zu den Einlaufrollen 7 zurückgeführt werden. Wie Fig. 1 zu entnehmen ist, enden die Führungsleisten 12 mit Führungsrollen 11 schon um die Länge mehrerer Halbkokillen 2 bzw. 2' vor den Rücklaufrollen 14, so daß die Halbkokillen 2 bzw. 2' wieder parallel zueinander und quer zur Produktionsrichtung 4 voneinander wegbewegt werden können, bevor sie von den Rücklaufrollen 14 verschwenkt werden.

An der Oberseite der Halbkokillen 2, 2' ist eine Verzahnung 16 ausgebildet, wobei die beiden Verzahnungen 16 der einander paarweise zugeordneten Halbkokillen 2, 2' miteinander fluchten, so daß von oben ein gemeinsames Antriebsritzel 17 in diese Verzahnung 16 eingreifen kann, das die Halbkokillen 2, 2' in der Formstrecke 9 als geschlossene Form durch die Formstrecke 9 schiebt. Der Antrieb dieses Antriebsritzels 17 erfolgt in üblicher Weise von einem nicht dargestellten Motor über ein Antriebszahnrad 18, das auf einer Welle 19 drehfest befestigt ist, die wiederum das Antriebsritzel 17 trägt. Die Welle 19 ist in einem Lagerbock 20 gelagert, der über Distanzprismen 21 gegenüber dem Maschinentisch abgestützt und mit letzterem mittels Schrauben 22 fest verbunden ist.

Auf der dargestellten Vorrichtung werden Kunststoff-Rohre 23 mit einer Querprofilierung, d. h. mit über deren Umfang umlaufenden Rillen 24 hergestellt, wie sie beispielsweise als Schutzrohre für Elektrokabel eingesetzt werden. Hierzu ist ein Extruder vorgesehen, von dem nur der Spritzkopf 25 angedeutet ist, aus dem ein nicht sichtbarer Schlauch extrudiert wird, der in noch warmplastischem Zustand in die in der Formstrecke 9 gebildete Form einläuft, in der die Querprofilierung ausgebildet wird. Die bisher beschriebene Vorrichtung ist bekannt, und zwar beispielsweise aus der DE-OS 2 061 027. Mit dieser Vorrichtung können in gleicher Weise sogenannte Verbundrohre hergestellt werden, die äußerlich dem Rohr 23 gleichen und innen noch mit einem durchgehend glatten Rohr einstückig ausgebildet sind.

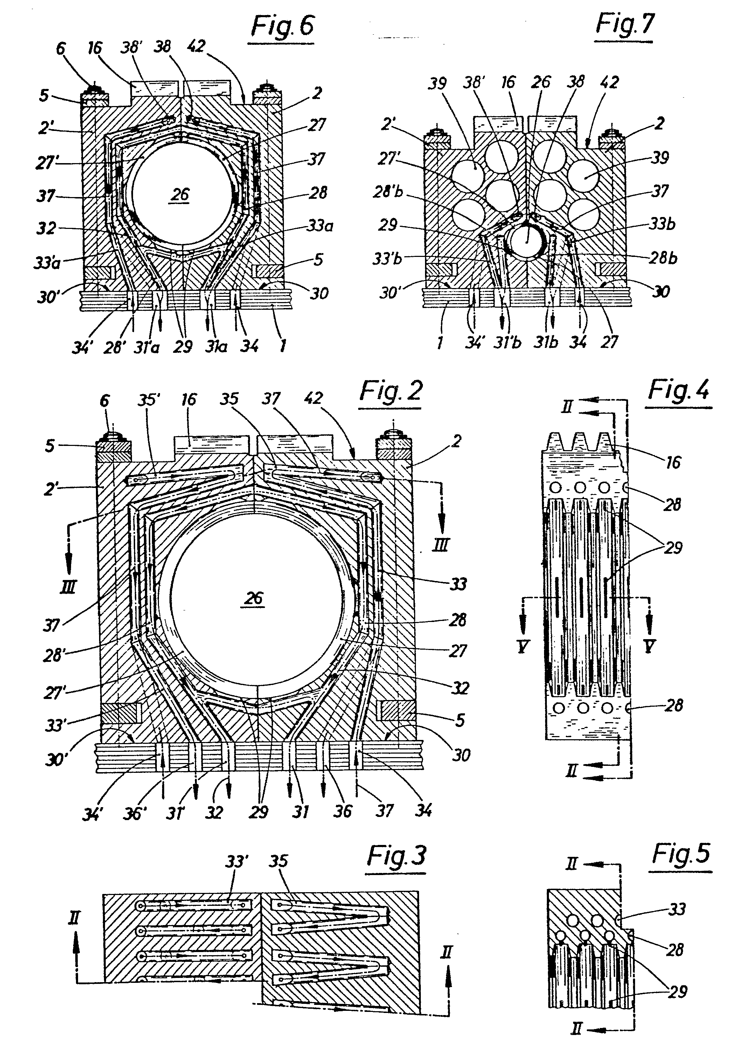

In der Formstrecke 9 werden die paarweise einander zugeordneten Halbkokillen 2, 2' gekühlt; außerdem erfolgt die Ausformung der Rillen 24 durch Vakuumbeaufschlagung des in der Formstrecke 9 gebildeten Formraums 26. Die in den Halbkokillen 2, 2' zur Bildung eines Formraums 26 ausgeformten Formausnehmungen 27, 27' haben eine zu der Außenform des Rohres 23 komplementäre Form. Sie sind mit Vakuumkanälen 28, 28' versehen, die in der Nähe der Wand der Formausnehmung 27 bzw. 27' verlaufen und diese bei paarweise aneinanderliegenden Halbkokillen 2, 2' in verhältnismäßig geringem Abstand umschließen. Von den Vakuumkanälen 28, 28' münden zahlreiche Vakuumschlitze 29 in die Formausnehmung 27 bzw. 27'. Die Vakuumkanäle 28, 28' sind bei aneinanderliegenden Halbkokillen 2, 2' miteinander verbunden, wie aus Fig. 2 hervorgeht. Die Vakuumkanäle 28 bzw. 28' münden in die auf dem Maschinentisch 1 aufliegende Unterseite 30 bzw. 30' der Halbkokillen 2, 2'. Bei paarweise aneinanderliegenden Halbkokillen 2, 2' sind sie in Überdeckung mit im Maschinentisch 1 angebrachten Vakuumanschlüssen 31, 31', die wiederum an eine Vakuumpumpe angeschlossen sind, worauf weiter unten noch eingegangen wird.

Die Luftströmung in den Vakuumkanälen 28, 28' und an den Vakuumanschlüssen 31, 31' ist durch Richtungspfeile 32 gekennzeichnet. Weiterhin sind in den Halbkokillen 2, 2' Kühlkanäle 33, 33' vorgesehen, wobei die Kühlkanäle 33, 33' in den paarweise einander zugeordneten Halbkokillen 2, 2' keine Verbindung untereinander haben. Sie beginnen ebenfalls an der jeweiligen Unterseite 30, 30' der entsprechenden Halbkokille 2, 2', wo sie bei aneinanderliegenden Halbkokillen 2, 2' mit im Maschinentisch 1 ausgebildeten Kühlwasserzuflüssen 34, 34' in Überdeckung kommen. Von dort führen die Kühlkanäle 33, 33' im Abstand um die jeweilige Formausnehmung 27, 27' herum. Bei der Ausführung nach den Fig. 2 bis 5 sind unterhalb der Verzahnung 16 noch wieder nach außen geführte Zusatzkühlkanäle 35 bzw. 35' ausgebildet. Wie insbesondere aus Fig. 3 erkennbar ist, sind Kühlkanäle 33, 33' — in Produktionsrichtung 4 gesehen — jeweils in verhältnismäßig geringem Abstand voneinander angeordnet. Wie aus Fig. 3, rechte Seite, hervorgeht, sind jeweils zwei in Produktionsrichtung 4 einander benachbarte Kühlkanäle 33 bzw. 33' in der Weise miteinander verbunden, daß die entsprechenden Zusatzkühlkanäle 35 bzw. 35' durch entsprechende Neigung zueinander miteinander verbunden sind. Wenn jeweils ein Kühlkanal 33 bzw. 33' an den Kühlwasserzufluß 34 bzw. 34' angeschlossen ist, kann auf diese Weise der in Produktionsrichtung 4 nachfolgende Kühlkanal an einen in dem Maschinentisch 1 ausgebildeten Kühlwasserrückfluß 36, 36' angeschlossen sein, wie insbesondere aus Fig. 2, linke Hälfte, hervorgeht. Die Kühlwasserströmungsrichtung ist durch die Richtungspfeile 37 angedeutet.

In Fig. 5 sind Halbkokillen 2, 2' dargestellt, die — wie sich auch aus der Darstellung im Vergleich zu Fig. 2 ergibt — zur Herstellung von Rohren kleineren Durchmessers ausgebildet sind. Die Vakuumkanäle 28, 28' mit den Vakuumschlitzen 29 sind hierbei identisch zur Ausbildung nach den Fig. 2 bis 6. Die Kühlkanäle 33a und 33'a sind ähnlich ausgebildet, wie bei der Ausführung nach den Fig. 2 bis 5, d. h. sie sind an der Unterseite 30 bzw. 30' der entsprechenden Halbkokillen 2, 2' mit Kühlwasserzuflüssen 34 bzw. 34' verbunden, wenn sie in der Formstrecke paarweise aneinanderliegen. Sie weisen allerdings keine Zusatzkühlkanäle auf, sondern sind jeweils an ihrem oberen Ende mit einem Durchbruch 38 bzw. 38' versehen, mittels dessen jeweils zwei in Produktionsrichtung 4 hintereinanderliegende Kühlkanäle 33a bzw. 33'a miteinander verbunden sind.

Das Kühlwasser fließt entsprechend den Richtungspfeilen 37 und wird an der Unterseite 30 bzw. 30' der jeweiligen Halbkokille 2 bzw. 2' in einen Vakuumanschluß 31a bzw. 31'a abgeleitet, in den dementsprechend der jeweilige Kühlkanal 33' bzw. 33'a ausmündet. In der Halbkokille 2 bzw. 2' selber haben aber Vakuumkanal 28 bzw. 28' einerseits und Kühlkanal 33' bzw. 33'a keine Verbindung miteinander. Auch bei dieser Ausführung erfolgt eine gute Kühlung der jeweiligen Halbkokille 2, 2' im Bereich der Verzahnung 16.

Bei der Ausführung nach Fig. 7 sind die Halbkokillen 2, 2' mit Formausnehmungen 27, 27' zur Herstellung von Rohren besonders kleinen Durchmessers, beispielsweise von 10 bis 22 mm, ausgebildet. Hierbei sind Vakuumkanäle 28b bzw. 28'b vorgesehen, die mit der entsprechenden Formausnehmung 27 bzw. 27' jeweils nur über einen Vakuumschlitz 29 verbunden sind. Weiterhin sind Kühlkanäle 33b, 33'b vorgesehen, die an ihren oberen inneren Enden jeweils wieder über Durchbrüche 38, 38' miteinander verbunden sind. Sie beginnen ebenfalls an der jeweiligen Unterseite 30, 30' der Halbkokille 2, 2', wo sie aus einem Kühlwasserzufluß 34 bzw. 34' im Maschinentisch 1 mit Kühlwasser beaufschlagt werden, das entsprechend den Richtungspfeilen 37 durch die Kühlkanäle 33b, 33'b fließt und wieder — wie bei der Ausführung nach Fig. 6 — in Vakuumanschlüsse 31b, 31'b im Maschinentisch 1 ausmündet, wobei auch hier die Vakuumkanäle 28b bzw. 28'b einerseits und die Kühlkanäle 33b bzw. 33'b andererseits in der jeweiligen Halbkokille 2, 2' keine Verbindung miteinander haben. Die den Formraum 26 bildenden Formausnehmungen 27, 27' sind in den Halbkokillen 2, 2' verhältnismäßig tief angeordnet; oberhalb sind zur Material- und Gewichtseinsparung dienende Hohlräume 39 vorgesehen, die als sich in Produktionsrichtung 4 erstreckende Bohrungen ausgebildet sind. Der Grund für diese Ausgestaltung liegt darin, daß auf einer vorgegebenen Vorrichtung mit Halbkokillen 2, 2' mit vorgegebener Höhe Rohre 23 mit unterschiedlichem Durchmesser hergestellt werden müssen, so daß jeweils ausreichend Platz in den Halbkokillen 2, 2' zur Verfügung steht, Formausnehmungen 27, 27' unterschiedlicher Größe auszubilden.

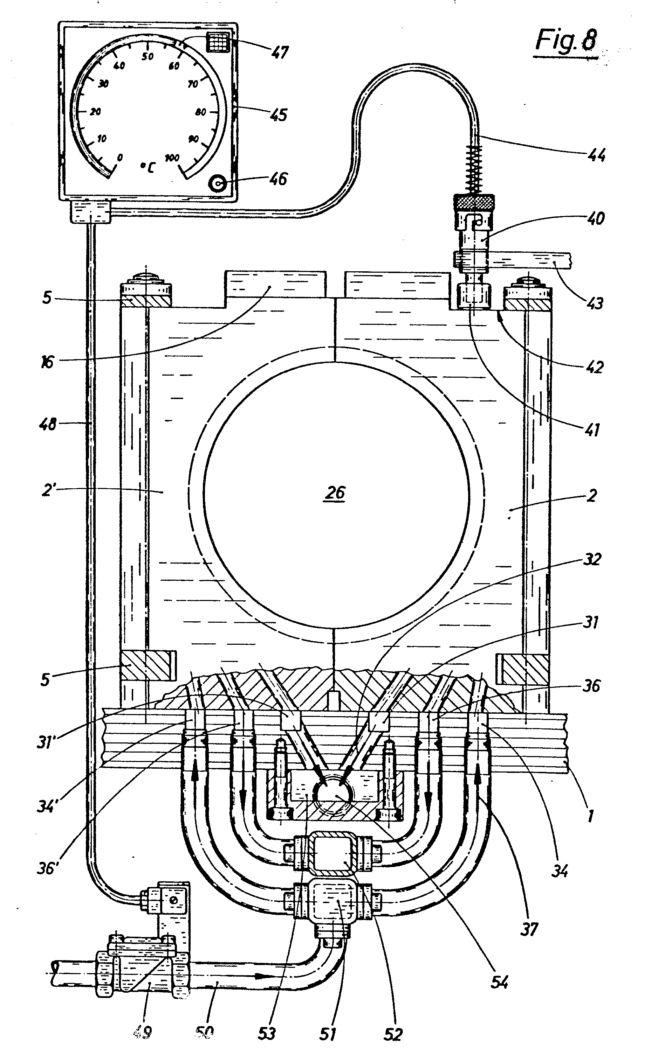

Um eine automatische Temperatursteuerung der Halbkokillen 2, 2' in der Formstrecke zu ermöglichen, ist gemäß Fig. 8 ein Temperaturfühler 40 vorgesehen, der mit einem Gleitschuh 41, beispielsweise aus Messing, auf der ebenen Oberseite 42 einer Halbkokille 2, neben deren Verzahnung 16 aufliegt, so daß ständig an dieser Stelle die Temperatur der fortlaufend durchlaufenden Halbkokillen 2 gemessen wird. Der Temperaturfühler 40 wird von einem Befestigungsbügel 43 getragen, der wiederum an Lagerbock 20 befestigt ist. Der Temperaturfühler 40 ist mittels einer elektrischen Leitung 44 mit einem Temperatursteuergerät 45 verbunden. In diesem Temperatursteuergerät kann die Solltemperatur mittels eines Einstellknopfes 46, die an einer Sollwert-Temperaturanzeige 47 sichtbar gemacht wird. Im Temperatursteuergerät 45 findet ein Soll-Ist-Wert-Vergleich zwischen der vom Temperaturfühler 40 gemeldeten Ist-Temperatur und der eingestellten Soll-Temperatur statt. Je nach dem Ergebnis dieses Soll-Ist-Wert-Vergleichs wird über eine Leitung 48 ein Signal auf ein als Magnetventil ausgebildetes Steuerventil 49 gegeben, das in einer Kühlwasserzuflußleitung 50 angeordnet ist, die über eine Rohrverzweigung 51 an die Kühlwasserzuflüsse 34 bzw. 34' im Maschinentisch 1 angeschlossen ist. Wie aus Fig. 8 ebenfalls hervorgeht, sind die im Maschinentisch 1 ausgebildeten Kühlwasserrückflüsse 36, 36' an eine gemeinsame Vakuumleitung 52 angeschlossen, damit der leichte Überdruck des Kühlwassers in den Kühlkanälen nicht dazu führt, daß Kühlwasser aus der Trennfuge zwischen Halbkokille 2, 2' und Maschinentisch 1 austritt.

Die beiden Vakuumanschlüsse 31, 31' münden in eine gemeinsame Vakuumkammer 53, in die wiederum ein Anschluß 54 von einer Vakuumpumpe einmündet. Bei Ausgestaltungen entsprechend den Fig. 6 und 7 läuft also auch das Kühlwasser in die Vakuumkammer 53 ab; eine gesonderte Vakuumleitung 52 entfällt hierbei.

## Patentansprüche

1. Vorrichtung zur Herstellung von Kunststoffrohren mit Querrillen, bei der mit einer Formausnehmung versehene, sich auf einer Formstrecke jeweils paarweise zu einer Form ergänzende Halbkokillen auf einem Maschinentisch im Kreislauf geführt angeordnet sind, wobei der Formstrecke ein Spritzkopf eines Extruders vorgeordnet ist und wobei weiterhin die Halbkokillen mit mit der jeweiligen Formausnehmung verbundenen Vakuumkanälen versehen sind, die in der Formstrecke in im Maschinentisch ausgebildete Vakuumanschlüsse einmünden, und wobei die Halbkokillen mit Kühlkanälen versehen sind, die in der Formstrecke in im Maschinentisch ausgebildete Kühlwasserzuflüsse und -abflüsse einmünden, dadurch gekennzeichnet, daß die Kühlkanäle (33, 33'; 33a, 33'a; 33b, 33'b) einerseits und die Vakuumkanäle (28, 28', 28b, 28'b) andererseits in den jeweiligen Halbkokillen (2, 2') völlig voneinander getrennt sind, wobei die Kühlkanäle (33, 33') in von den Vakuumanschlüssen (31, 31') im Maschinentisch (1) gesondert ausgebildete Kühlwasserrückflüsse (36, 36') einmünden, die ebenfalls mit Vakuum beaufschlagbar sind (Fig. 2), und wobei ein Temperatursteuergerät (45) vorgesehen ist, dem mindestens ein die Temperatur einer Halbkokille (2) abtastender Temperaturfühler (40) vorgeschaltet ist und ein Steuerventil (49) zur Steuerung der Kühlwassermenge pro Zeiteinheit nachgeschaltet ist.

2. Vorrichtung zur Herstellung von Kunststoffrohren mit Querrillen, bei der mit einer Formausnehmung versehene, sich auf einer Formstrecke jeweils paarweise zu einer Form ergänzende Halbkokillen auf einem Maschinentisch im Kreislauf geführt angeordnet sind, wobei der Formstrecke ein Spritzkopf eines Extruders vorgeordnet ist und wobei weiterhin die Halbkokillen mit mit der jeweiligen Formausnehmung verbundenen Vakuumkanälen versehen sind, die in der Formstrecke in im Maschinentisch ausgebildete Vakuumanschlüsse einmünden, und wobei die Halbkokillen mit Kühlkanälen versehen sind, die in der Formstrecke in im Maschinentisch ausgebildete Kühlwasserzuflüsse und -abflüsse einmünden, dadurch gekennzeichnet, daß die Kühlkanäle (33, 33'; 33a, 33'a; 33b, 33'b) einerseits und die Vakuumkanäle (28, 28'; 28b, 28'b) andererseits in der jeweiligen Halbkokille (2, 2') völlig voneinander getrennt sind, wobei die Kühlkanäle (33a, 33'a; 33b, 33'b) in die im Maschinentisch (1) ausgebildeten Vakuumanschlüsse (31a, 31'a; 31b, 31'b) einmünden (Fig. 6, 7), und wobei ein Temperatursteuergerät (45) vorgesehen ist,dem mindestens ein die Temperatur einer Halbkokille (2) abtastender Temperaturfühler (40) vorgeschaltet und ein Steuerventil (49) zur Steuerung der Kühlwassermenge pro Zeiteinheit nachgeschaltet ist.

3. Vorrichtung nach Anspruch 1 oder 2, dadurch gekennzeichnet, daß der Temperaturfühler (40) mittels eines Gleitschuhs (41) an einer glatten Außenfläche (Oberseite 42) einer Halbkokille (2) anliegt.

**Claims**

1. Apparatus for manufacturing plastic tubing with cross grooves, in which apparatus mould halves, which are provided with a mould cavity and which combine in complementary pairs to form a mould on a mould run,are arranged to be guided in a circular path on a supporting table, a head of an extruder being arranged in front of the mould run and, in addition, the mould halves being provided with vacuum channels which are connected to each mould cavity and which, when in the mould run, lead into vacuum connection formed in the supporting table, and the mould halves being provided with cooling channels which, when in the mould run, lead into cooling water inlets and outlets formed in the supporting table, characterised in that the cooling channels (33, 33'; 33a, 33'a; 33b, 33'b), on the one hand, and the vacuum channels (28, 28', 28b, 28'b), on the other hand, are completely separate from one another in the respective mould halves (2, 2'), the cooling channels (33, 33') leading into cooling water return lines (36, 36') which are formed separately from the vacuum connections (31, 31') in the supporting table (1) and which can also be subjected to a vacuum (Fig. 2), and there being provided a temperature control device (45) upstream from which is arranged a temperature sensor (40) for detecting the temperature of a mould half (2) and downstream from which is arranged a control valve (49) for controlling the quantity of cooling water per unit of time.

2. Apparatus for manufacturing plastic tubing with cross grooves, in which apparatus mould halves, which are provided with a mould cavity and which combine in complementary pairs to form a mould on a mould run, are arranged to be guided in a circular path on a supporting table, a head of an extruder being arranged in front of the mould run and, in addition, the mould halves being provided with vacuum channels which are connected to each mould cavity and which, when in the mould run, lead into vacuum connections formed in the supporting table, and the mould halves being provided with cooling channels which, when in the mould run, lead into cooling water inlets and outlets formed in the supporting table, characterised in that the cooling channels (33, 33'; 33a, 33'a; 33b, 33'b), on the one hand, and the vacuum channels (28, 28'; 28b, 28'b), on the other hand, are completely separate from one another in the respective mould halves (2, 2'), the cooling channels (33a, 33'a; 33b, 33'b) leading into the vacuum connections (31a, 31'a; 31b, 31'b) which are formed in the supporting table (1) (Fig. 6, 7), and there being provided a temperature control device (45) upstream from which is arranged a temperature sensor (40) for detecting the temperature of a mould half (2) and downstream from which is arranged a control valve (49) for controlling the quantity of cooling water er unit of time.

3. Apparatus according to Claim 1 or 2, characterised in that the temperature sensor (40) comes into contact with a smooth outer surface (upper side 42) of a mould half (2) with the aid of a guide shoe (41).

**Revendications**

1. Dispositif pour fabriquer des tubes en matière plastique avec cannelures transverses,dans lequel des demi-coquilles munies d'une cavité de moule et se complétant respectivement par couple pour former un moule, dans une section de formage, sont disposées sur une table d'une machine, en étant guidées selon un circuit, une tête d'injection d'une extrudeuse étant disposée en amont de la section de formage et en outre les demi-coquilles étant équipées de canaux à vide reliés à la cavité de moule respective et qui débouchent dans la section de formage, dans des raccords à vide réalisés dans la table de la machine, tandis que les demi-coquilles ont munies de canaux de refroidissement qui débouchent dans la section de formage, dans des arrivées et des évacuations de l'eau de refroidissement, ménagées dans la table de la machine, caractérisé en ce que les canaux de refroidissement (33, 33'; 33a, 33'a; 33b, 33'b) d'une part et les canaux à vide (28, 28'; 28b, 28'b) d'autre part sont totalement séparés les uns des autres dans la demi-coquille respective (2, 2'), tandis que les canaux de refroidissement (33, 33') débouchent dans des retours (36, 36') de l'eau de refroidissement réalisés de façon particulière par les raccords à vide (31, 31') dans la table (1) de la machine et auxquels on peut également appliquer un vide (figure 2), et tandis qu'il est prévu un appareil de commande de la température (45), en amont duquel est branché au moins une sonde de température (40) explorant la température d'une demi-coquille (2), et en aval duquel est branchée une vanne de commande (49) servant à commander la quantité d'eau de refroidissement par unité de temps.

2. Dispositif pour fabriquer des tubes en matière plastique avec cannelures transverses, dans lequel des demi-coquilles munies d'une cavité de moule et se complétant respectivement par couple pour former un moule, dans une section de formage, sont disposées sur une table d'une machine, en étant guidées selon un circuit, une tête d'injection d'une extrudeuse étant disposée en amont de la section de formage et en outre les demi-coquilles étant équipées de canaux à vide reliés à la cavité de moule respective et qui débouchent dans la section de formage, dans des raccords à vide réalisées dans la table de la machine, tandis que les demi-coquilles sont munies de canaux de refroidissement qui débouchent dans la section de formage, dans des arrivées et des évacuations de l'eau de refroidissement, ménagées dans la table de la machine, caractérisé en ce que les canaux de refroidissement (33, 33'; 33a, 33'a; 33b, 33'b) d'une part et les canaux à vide (28, 28'; 28b, 28'b) d'autre part sont totalement séparés les uns des autres dans la demi-coquille respective (2, 2'), tandis que les canaux de refroidissement (33a, 33'a; 31b, 31'b) débouchent dans des raccords à vide (31a, 31'a; 31b, 31'b) ménagés dans la table (1) de la machine (figure 6, 7), et tandis qu'il est prévu un appareil de commande de la température (45), en amont duquel est branché au moins une sonde de température (40) explorant la température d'une demi-coquille (2), et en aval duquel est branchée une vanne de commande (49) servant à commander la quantité d'eau de refroidissement par unité de temps.

3. Dispositif selon la revendication 1 ou 2, caractérisé en ce que la sonde de température (40) est appliquée au moyen d'un patin (41) contre une surface extérieure (face supérieure 42) d'une demi-coquille (2).

Fig.1

## Fig.6

## Fig.7

## Fig.2

## Fig.4

## Fig.3

## Fig.5

0 065 729

*Fig. 8*